# EUROPEAN PATENT APPLICATION

(11) **EP 4 631 860 A1**
(43) Date of publication of application: **15.10.2025**
(21) Application number: 25169281.0
(22) Date of filing: 08.04.2025
(51) Int. Cl.: B64D 33/08, B64D 37/02, B64D 37/34, F02C 7/14, F02C 7/224, F28D 1/02

(54) **HEAT EXCHANGER COOLING ASSEMBLY FOR AN AIRCRAFT PROPULSION SYSTEM**

(30) Priority: 09.04.2024 US 202418630740
(71) Applicant: PRATT & WHITNEY CANADA CORP., Longueuil, Québec J4G 1A1 (CA)
(72) Inventor: WEAVER, Paul, (01BE5) Longueuil, J4G 1A1 (CA); CHATELOIS, Bruno, (01BE5) Longueuil, J4G 1A1 (CA); FORTIER, Alexandre, (01BE5) Longueuil, J4G 1A1 (CA); BELLIS, Andrew D., (01BE5) Longueuil, J4G 1A1 (CA)
(74) Representative: Dehns

(57) **Abstract**

An assembly for an aircraft propulsion system (20) includes an engine (22), an aircraft aerostructure (1002), and a heat exchanger (84). The engine (22) includes a coolant system (92; 98). The aircraft aerostructure (1002) forms a fuel tank (76; 91) for the engine (22). The aircraft aerostructure (1002) includes an aerostructure skin (1004) including an interior skin side (1006) and an exterior skin side (1008). The interior skin side (1006) forms a bottom side (78) of the fuel tank (76; 91). The exterior skin side (1008) forms an aerodynamic surface of the aircraft aerostructure (1002). The heat exchanger (84) is disposed at the aerostructure skin (1004). The heat exchanger (84) includes a heat exchanger body (118) forming a coolant passage (140). The coolant passage (140) extends through the heat exchanger body (118) between and to an inlet (94) and an outlet (96) connected in fluid communication with the coolant system (92; 98).

## Description

### TECHNICAL FIELD

This disclosure relates to heat exchanger cooling assemblies for an aircraft propulsion system.

### BACKGROUND OF THE ART

Some propulsion systems for aircraft may include heat exchanger cooling assemblies configured to cool or heat one or more fluids (e.g., lubricant, fuel, cooling air, etc.) for the propulsion system. Various heat exchanger cooling systems are known in the art for controlling fluid temperatures. While these known systems may be suitable for their intended purposes, there is always room in the art for improvement.

### SUMMARY

It should be understood that any or all of the features or embodiments described herein can be used or combined in any combination with each and every other feature or embodiment described herein unless expressly noted otherwise.

According to an aspect of the present invention, an assembly for an aircraft propulsion system includes an engine, an aircraft aerostructure, and a heat exchanger. The engine includes a coolant system. The aircraft aerostructure forms a fuel tank for the engine. The aircraft aerostructure includes an aerostructure skin including an interior skin side and an exterior skin side. The interior skin side forms a bottom side of the fuel tank. The exterior skin side forms an aerodynamic surface of the aircraft aerostructure. The heat exchanger is disposed at the aerostructure skin. The heat exchanger includes a heat exchanger body forming a coolant passage. The coolant passage extends through the heat exchanger body between and to an inlet and an outlet. The inlet and the outlet are connected in fluid communication with the coolant system.

In any embodiments, the heat exchanger body may be disposed within the fuel tank.

In any of the aspects or embodiments described above, the heat exchanger may be disposed outside the fuel tank at the exterior skin side.

In any of the aspects or embodiments described above, the heat exchanger may be disposed at the exterior skin side on a portion of the aerostructure skin forming the fuel tank.

In any of the aspects or embodiments described above, the heat exchanger body may include a first plurality of heat transfer fins disposed within the fuel tank.

In any of the aspects or embodiments described above, the heat exchanger body may include a second plurality of heat transfer fins disposed outside of the fuel tank at the exterior skin side.

In any of the aspects or embodiments described above, the engine may include a rotational assembly and at least one bearing assembly rotationally supporting the rotational assembly. The coolant system may be an engine oil system connected in fluid communication with the at least one bearing assembly.

In any of the aspects or embodiments described above, the assembly may further include a bypass regulator connected in fluid communication with the engine oil system and the inlet upstream of the inlet. The bypass regulator may be selectively positionable in at least an open position or a closed position to control a coolant flow through a bypass conduit to bypass the heat exchanger and direct the coolant flow to the engine oil system.

In any of the aspects or embodiments described above, the assembly may further include a controller assembly including a coolant temperature sensor and a controller. The coolant temperature sensor may be configured to measure a coolant temperature of coolant for the engine oil system. The controller may include a processor and a non-transitory memory storing instructions which, when executed by the processor, cause the processor to control a position of the bypass regulator using the coolant temperature.

In any of the aspects or embodiments described above, the assembly may further include a controller assembly including a fuel temperature sensor and a controller. The fuel temperature sensor may be disposed within the fuel tank. The fuel temperature sensor may be configured to measure a fuel temperature of fuel within the fuel tank. The controller may include a processor and a non-transitory memory storing instructions which, when executed by the processor, cause the processor to control a position of the bypass regulator using the fuel temperature.

In any of the aspects or embodiments described above, controlling the position of the bypass regulator using the fuel temperature may include identifying a presence or an absence of a high-temperature fuel condition by comparing the fuel temperature to a high-temperature threshold value and closing the bypass regulator in response to identifying the presence of the high-temperature fuel condition.

In any of the aspects or embodiments described above, the aircraft aerostructure may be an aircraft wing.

According to another aspect of the present invention, an assembly for an aircraft propulsion system includes an engine, an aircraft wing, and a heat exchanger. The engine includes a rotational assembly, at least one bearing assembly, and an engine oil system. The at least one bearing assembly rotatably supports the rotational assembly. The engine oil system is connected in fluid communication with the at least one bearing assembly. The aircraft wing forms a fuel tank for the engine. The heat exchanger is mounted to the aircraft wing at the fuel tank. The heat exchanger includes a heat exchanger body forming a coolant passage. The coolant passage extends through the heat exchanger body between and to an inlet and an outlet. The inlet and the outlet are connected in fluid communication with the engine oil system.

In embodiments described above, the heat exchanger body may be disposed within the fuel tank.

In any of the aspects or embodiments described above, the heat exchanger may be disposed outside the fuel tank at an exterior skin side of the aircraft wing.

In any of the aspects or embodiments described above, the heat exchanger may be disposed at the exterior skin side on a portion of the aircraft wing forming the fuel tank.

In any of the aspects or embodiments described above, the heat exchanger body may include a first plurality of heat transfer fins disposed within the fuel tank.

In any of the aspects or embodiments described above, the heat exchanger body may include a second plurality of heat transfer fins disposed outside of the fuel tank at the exterior skin side.

According to another aspect of the present invention, an assembly for an aircraft propulsion system includes an engine, an aircraft wing, and a heat exchanger. The engine includes a rotational assembly, at least one bearing assembly, and an engine oil system. The at least one bearing assembly rotatably supports the rotational assembly. The engine oil system is connected in fluid communication with the at least one bearing assembly. The aircraft wing forms a fuel tank for the engine. The aircraft wing includes a lower skin. The lower skin extends between and to an interior skin surface and an exterior skin surface. The interior skin surface forms a bottom side of the fuel tank. The exterior skin surface forms an aerodynamic surface of the aircraft wing. The heat exchanger is disposed at the lower skin. The heat exchanger includes a heat exchanger body forming a coolant passage. The coolant passage extends through the heat exchanger body between and to an inlet and an outlet. The inlet and the outlet are connected in fluid communication with the engine oil system.

In embodiments described above, the heat exchanger body may be disposed within the fuel tank at the bottom side.

The present disclosure, and all its aspects, embodiments and advantages associated therewith will become more readily apparent in view of the detailed description provided below, including the accompanying drawings.

### DESCRIPTION OF THE DRAWINGS

FIG. 1 schematically illustrates a cutaway, side view of an aircraft propulsion system, in accordance with one or more embodiments of the present disclosure.
FIG. 2 schematically illustrates a cutaway, side view of a portion of another aircraft propulsion system, in accordance with one or more embodiments of the present disclosure.
FIG. 3 schematically illustrates a cooling assembly for an aircraft propulsion system, in accordance with one or more embodiments of the present disclosure.
FIG. 4 schematically illustrates another cooling assembly for an aircraft propulsion system, in accordance with one or more embodiments of the present disclosure.
FIG. 5 schematically illustrates another cooling assembly for an aircraft propulsion system, in accordance with one or more embodiments of the present disclosure.
FIG. 6 illustrates a perspective view of a heat exchanger for a cooling assembly disposed at an aircraft aerostructure, in accordance with one or more embodiments of the present disclosure.
FIG. 7 illustrates a cutaway, side view of the heat exchanger of FIG. 6, in accordance with one or more embodiments of the present disclosure.
FIG. 8 illustrates another cutaway, side view of the heat exchanger of FIG. 6, in accordance with one or more embodiments of the present disclosure.
FIG. 9 illustrates a cutaway, side view of another heat exchanger disposed at an aircraft aerostructure, in accordance with one or more embodiments of the present disclosure.
FIG. 10 illustrates another cutaway, side view of the heat exchanger of FIG. 9, in accordance with one or more embodiments of the present disclosure.
FIG. 11 illustrates a cutaway, perspective view of another heat exchanger disposed at an aircraft aerostructure, in accordance with one or more embodiments of the present disclosure.
FIG. 12 illustrates another cutaway, side view of the heat exchanger of FIG. 11, in accordance with one or more embodiments of the present disclosure.

### DETAILED DESCRIPTION

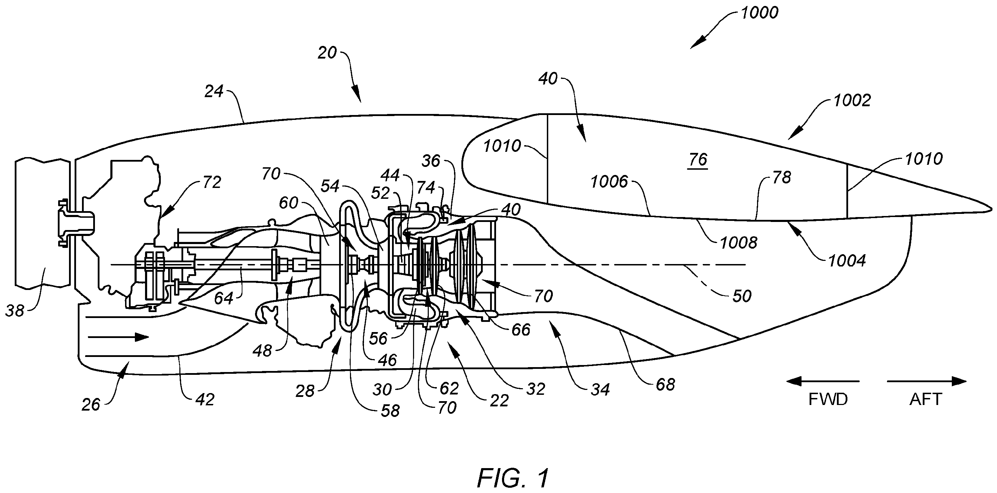

FIG. 1 schematically illustrates an aircraft 1000 including a propulsion system 20. Briefly, the aircraft may be a fixed-wing aircraft (e.g., an airplane), a rotary-wing aircraft (e.g., a helicopter), a tilt-rotor aircraft, a tilt-wing aircraft, or another aerial vehicle. Moreover, the aircraft may be a manned aerial vehicle or an unmanned aerial vehicle (UAV, e.g., a drone). For example, the propulsion system 20 of FIG. 1 is disposed on the aircraft 1000 at (e.g., on, adjacent, or proximate) a wing 1002 of the aircraft 1000. The present disclosure, however, is not limited to the particular propulsion system 20 and aircraft 1000 mounting configuration of FIG. 1. The propulsion system of FIG. 1 includes a gas turbine engine 22 and a nacelle 24.

The gas turbine engine 22 of FIG. 1 is configured as a turboprop engine. However, the present disclosure is not limited to any particular configuration of gas turbine engine for the propulsion assembly 20, and examples of gas turbine engine configurations for the propulsion system 20 may include, but are not limited to, a turbofan engine, a turbojet engine, a propfan engine, or the like. Moreover, aspects of the present disclosure may be equally applicable to aircraft propulsion systems including other engine configurations such as, but not limited to, rotary engines, piston engines, and the like, or to electric aircraft propulsion systems (e.g., battery-electric propulsion systems, fuel-cell-electric propulsion systems, etc.). The gas turbine engine 22 of FIG. 1 includes an air intake 26, a compressor section 28, a combustor 30 (e.g., an annular combustor), a turbine section 32, an exhaust section 34, an engine static structure 36, a propulsor 38 (e.g., a propeller), and a fuel system 40.

The air intake 26 of FIG. 1 is disposed at (e.g., on, adjacent, or proximate) a forward end of the propulsion system 20. Portions of the air intake 26 may be formed by or otherwise disposed at (e.g., on, adjacent, or proximate) the nacelle 24. The air intake 26 includes an intake duct 42 connected in fluid communication with and upstream of the compressor section 28.

The compressor section 28 and the turbine section 32 of FIG. 1 form a first rotational assembly 44 (e.g., a high-pressure spool), a second rotational assembly 46 (e.g., a low-pressure spool), and a third rotational assembly 48 (e.g., a power spool) of the gas turbine engine 22. The first rotational assembly 44, the second rotational assembly 46, and the third rotational assembly 48 are mounted for rotation about a rotational axis 50 (e.g., an axial centerline of the gas turbine engine 22) relative to the engine static structure 36.

The first rotational assembly 44 includes a first shaft 52, a bladed first compressor rotor 54, and a bladed first turbine rotor 56. The first shaft 52 interconnects the bladed first compressor rotor 54 and the bladed first turbine rotor 56.

The second rotational assembly 46 includes a second shaft 58, a bladed second compressor rotor 60, and a bladed second turbine rotor 62. The second shaft 58 interconnects the bladed second compressor rotor 60 and the bladed second turbine rotor 62.

The third rotational assembly 46 includes a power shaft 64 and a bladed power turbine rotor 66. The power shaft 64 is connected to the bladed power turbine rotor 66. The power shaft 64 is operably connected (e.g., coupled) to the propulsor 38.

The exhaust section 34 of FIG. 1 is disposed at (e.g., on, adjacent, or proximate) an aft end of the propulsion system 20. Portions of the exhaust section 34 may be formed by or otherwise disposed at (e.g., on, adjacent, or proximate) the nacelle 24. The exhaust section 34 includes an exhaust duct 68 connected in fluid communication with and downstream of the turbine section 32.

The engine static structure 36 includes engine casings, cowlings, and other fixed (e.g., non-rotating) structures of the gas turbine engine 22 which house and/or structurally support components of the gas turbine engine 22 such as, but not limited to, the air intake 26, the compressor section 28, the combustor 30, the turbine section 32, and the exhaust section 34. The engine static structure 36 includes one or more bearing assemblies 70 and/or gear boxes configured to rotationally support components of the first rotational assembly 44, the second rotational assembly 46, and/or the third rotational assembly 48. The engine static structure 36 of FIG. 1 includes, for example, a gear box 72 (e.g., a reduction gear box (RGB) coupling the power shaft 64 and the propulsor 38. Of course, the present disclosure is not limited to the particular engine static structure 36 configuration of FIG. 1, including a quantity, location, or configuration of bearing assemblies (e.g., the bearing assemblies 70) or gear boxes (e.g., the gear box 72). As will be discussed in further detail below, components of the engine static structure 36 facilitating rotation and rotational support for the rotational assemblies 44, 46, 48 (e.g., the bearing assemblies 70 and/or the gear box 72) may be cooled and/or lubricated by a lubrication (e.g., oil) system.

The fuel system 40 of FIG. 1 includes a fuel injection assembly 74 and a fuel tank 76. The fuel injection assembly 74 is connected in fluid communication with the fuel tank 76. The fuel injection assembly 74 is configured to direct and control (e.g., modulate) fuel from the fuel tank 76 to the combustor 30. The fuel tank 76 of FIG. 1 is formed by and disposed within the wing 1002. The wing 1002 of FIG. 1 includes a lower skin 1004 forming a portion of the exterior aerodynamic surface of the wing 1002. The lower skin 1004 forms a bottom side 78 (e.g., a gravitational bottom) of the fuel tank 76. For example, the lower skin 1004 may extend between and to an interior skin side 1006 of the lower skin 1004 and an exterior skin side 1008 of the lower skin 1004. The interior skin side 1006 may form all or a portion of the bottom side 78. The exterior skin side 1008 may form an exterior aerodynamic surface of the wing 1002. The fuel tank 76 may be further formed within the wing 1002, for example, by one or more spars 1010 or other interior structural members (e.g., ribs, bulkheads, baffles, etc.) of the wing 1002. The present disclosure, however, is not limited to the foregoing exemplary configuration of the fuel tank 76 formed by the wing 1002. For example, the fuel tank 76 may be formed by another aerostructure (e.g., a fuselage) of the aircraft 1000 disposed outside of the propulsion system 20 (e.g., the gas turbine engine 22 and the nacelle 24).

The nacelle 24 houses the gas turbine engine 22 and forms and aerodynamic cover for the propulsion system 20. The nacelle 24 may extend about (e.g., completely around) and surround the gas turbine engine 22 along the rotational axis 50. The nacelle 24 may additionally surround and/or form portions of the air intake 26 and the exhaust section 34. The nacelle 24 may be mounted to or otherwise disposed at (e.g., on, adjacent, or proximate) one or more wings (e.g., the wing 1002) of the aircraft 1000.

During operation of the propulsion system 20 of FIG. 1, ambient air enters the propulsion system 20 through the air intake 26 and is directed by the intake duct 42 into a core flow path 80 of the gas turbine engine 22. The ambient air flow along the core flow path 80 is compressed in the compressor section 28 and directed into a combustion chamber of the combustor 30. Fuel from the fuel tank 76 is injected into the combustion chamber by the fuel injection assembly 74 and mixed with the compressed air to provide a fuel-air mixture. This fuel-air mixture is ignited, and combustion products thereof flow through the turbine section 32, thereby driving rotation of the first rotational assembly 44, the second rotational assembly 46, and the third rotational assembly 48. Rotation of the third rotational assembly 48 drives rotation of the propulsor 38 to generate propulsion (e.g., thrust) for the aircraft 1000. The combustion gas from the turbine section 32 is exhausted from the propulsion system 20 by the exhaust section 34 (e.g., through the exhaust duct 68).

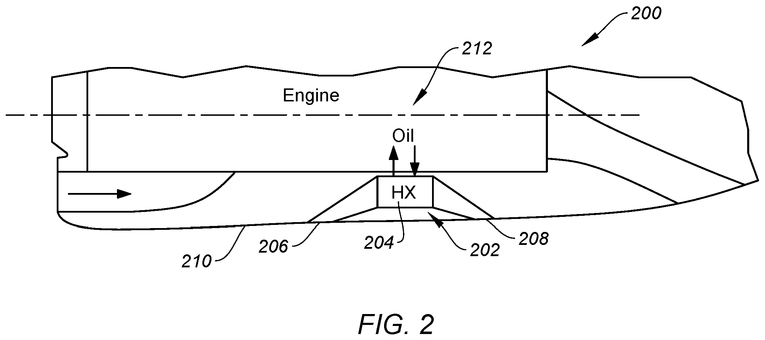

During operation of a propulsion system, such as the propulsion system 20, lubricant (e.g., oil) used for cooling and lubricating components of the engine static structure (e.g., bearings, gear boxes, etc.) and rotational assemblies (e.g., gas turbine engine spools) typically requires cooling to maintain the lubricant within an appropriate operational temperature range. Accordingly, the propulsion system may include a one or more heat exchangers or other cooling systems configured to facilitate cooling and temperature control for the lubricant. FIG. 2 illustrates a propulsion system 200 including an exemplary cooling system 202 which may be used for cooling a lubricant or other liquid coolant. The cooling system 202 of FIG. 2 includes a heat exchanger 204, an air inlet 206, and an air outlet 208. The heat exchanger 204 is an air-liquid heat exchanger (e.g., an air-cooled oil cooler (ACOC)) configured to facilitate cooling of engine oil using ambient air flow through the air inlet 206, the heat exchanger 204, and the air outlet 208. The heat exchanger 204 is disposed within a nacelle 210 of the propulsion system 200 and outside of a gas turbine engine 212 of the propulsion system 200. The position of the heat exchanger 204 radially between the gas turbine engine 212 and the nacelle 210 exterior, however, takes up limited space available within the nacelle 210 and may necessitate the use of a larger nacelle, thereby increasing aerodynamic drag of the propulsion system 200. Moreover, the cooling system 202 may be susceptible to icing and foreign object debris (FOD) during operation, which can obstruct air flow through the heat exchanger 204 or otherwise impair operation of the cooling system 202.

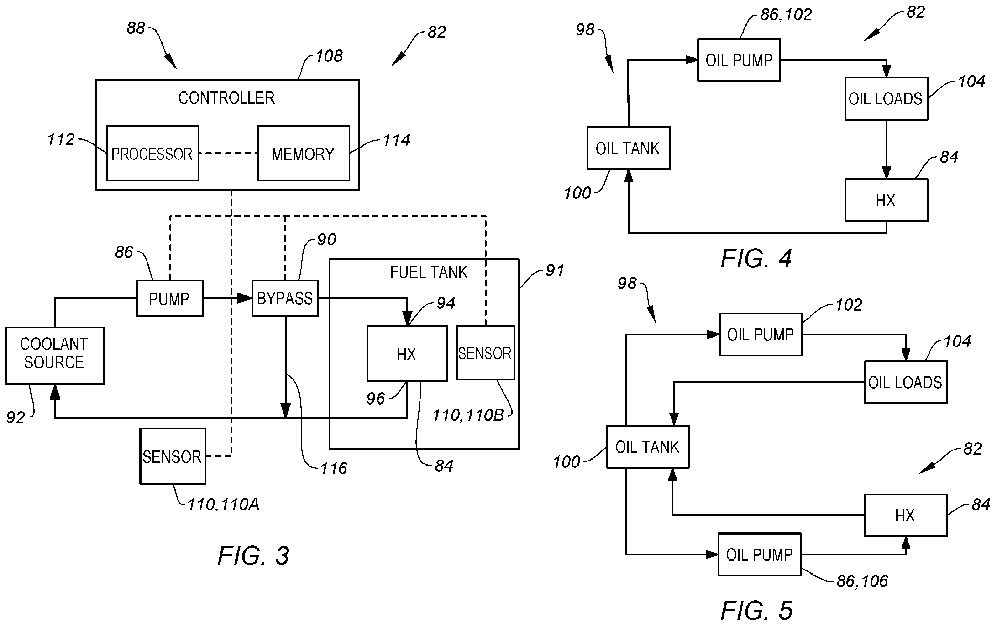

FIG. 3 schematically illustrates a cooling assembly 82 for the propulsion system 20 (see FIG. 1). The cooling assembly 82 of FIG. 3 includes a heat exchanger 84 and a pump 86. The cooling assembly 82 may additionally include a controller assembly 88 and/or a bypass regulator 90.

The heat exchanger 84 is disposed within a fuel tank 91 for the propulsion system 20 (see FIG. 1). For example, the fuel tank 91 of FIG. 3 may be a fuel tank formed by the wing 1002 of the aircraft 1000 (e.g., the fuel tank 76; see FIG. 1). However, the present disclosure is not limited to use of the heat exchanger 84 with a fuel tank formed by an aircraft wing. The heat exchanger 84 includes an inlet 94 and an outlet 96. The location of the heat exchanger 84 within the fuel tank 91, for example, as an alternative to an air-cooled heat exchanger within the nacelle 24 (see FIG. 1; see also heat exchanger 204 of FIG. 2) facilitates a reduced aerodynamic profile of the nacelle 24, thereby reducing aerodynamic drag of the propulsion system 20 (see FIG. 1). The heat exchanger 84, disposed within the fuel tank 91, is also not susceptible to icing or FOD exposure during aircraft 1000 operation (see FIG. 1). The inlet 94 and the outlet 96 are connected in fluid communication with a coolant source 92, for example, by any suitable conduit (e.g., pipe, hose, tube, etc.), series of conduits, and/or fluid systems or components. The coolant source 92 may be a coolant system or component thereof such as, but not limited to, an engine oil system, an electric motor coolant system, an electrical or electronic (e.g., an electrical inverter) coolant system, or the like. While the coolant source 92 may be described herein as an engine oil system, it should be understood that the present disclosure coolant source 92 is not limited to engine oil systems. The pump 86 of FIG. 3 is connected in fluid communication with and between the heat exchanger 84 and the coolant source 92 to direct (e.g., pump) coolant from the coolant source 92 through the heat exchanger 84 and back to the coolant source 92. The pump 86 of FIG. 3 is connected in fluid communication between the coolant source 92 and the inlet 94. The pump 86 may alternatively be connected in fluid communication between the coolant source 92 and the outlet 96.

FIGS. 4 and 5 illustrate exemplary configurations of the cooling assembly 82 for an engine oil system 98 (e.g., the coolant source 92) of the gas turbine engine 22 (see FIG. 1). The cooling assembly 82 of FIGS. 4 and 5 is connected in fluid communication with an oil tank 100 of the engine oil system 98. The cooling assembly 82 and the engine oil system 98 of FIG. 4 form a single-loop configuration. The engine oil system 98 of FIG. 4 includes an oil pump 102 configured to direct (e.g., pump) oil from the oil tank 100 to one or more oil loads 104 (e.g., bearings, gear boxes, and other rotational equipment) of the gas turbine engine 22. The oil from the oil loads 104 is directed through and cooled by the heat exchanger 84, and then returned to the oil tank 100 for use by the oil engine oil system 98. The cooling assembly 82 and the engine oil system 98 of FIG. 5 form a two-loop configuration. The oil pump 102 of FIG. 5 directs (e.g., pumps) oil from the oil tank 100 to the oil loads 104 and back to the oil tank 100 through a first loop. The cooling assembly 82 of FIG. 5 includes an oil pump 106. The oil pump 106 directs (e.g., pumps) oil from the oil tank 100 to the heat exchanger 84 and back to the oil tank 100 through a second loop. The present disclosure, however, is not limited to the foregoing, exemplary configurations of the engine oil system 98 and the cooling assembly 82 illustrated in FIGS. 4 and 5 and described above.

The controller assembly 88 includes a controller 108. The controller assembly 88 may additionally include one or more sensors 110. The controller 108 is connected in signal communication with at least some of the components of the cooling assembly 82 (e.g., the pump 86, the bypass regulator 90, the sensors 110, etc.) to control and/or receive signals therefrom to perform the functions described herein. The controller 108 includes a processor 112 connected in signal communication with memory 114. The processor 112 may include any type of computing device, computational circuit, processor(s), CPU, computer, or the like capable of executing a series of instructions that are stored in the memory 114. Instructions can be directly executable or can be used to develop executable instructions. For example, instructions can be realized as executable or non-executable machine code or as instructions in a high-level language that can be compiled to produce executable or non-executable machine code. Further, instructions also can be realized as or can include data. Computer-executable instructions also can be organized in any format, including routines, subroutines, programs, data structures, objects, modules, applications, applets, functions, etc. The instructions may include an operating system, and/or executable software modules such as program files, system data, buffers, drivers, utilities, and the like. The executable instructions may apply to any functionality described herein to enable the controller 108 to accomplish the same algorithmically and/or by coordination of cooling assembly 82 components. The memory 114 may include a single memory device or a plurality of memory devices (e.g., a computer-readable storage device that can be read, written, or otherwise accessed by a general purpose or special purpose computing device, including any processing electronics and/or processing circuitry capable of executing instructions). The present disclosure is not limited to any particular type of memory device, which may be non-transitory, and may include read-only memory, random access memory, volatile memory, non-volatile memory, static memory, dynamic memory, flash memory, cache memory, volatile or non-volatile semiconductor memory, optical disk storage, magnetic disk storage, magnetic tape, other magnetic storage devices, or any other medium capable of storing one or more instructions, and/or any device that stores digital information. The memory device(s) may be directly or indirectly coupled to the controller 108 and its processor 112. The controller 108 may include, or may be in communication with, an input device that enables a user to enter data and/or instructions, and may include, or be in communication with, an output device configured, for example to display information (e.g., a visual display or a printer), or to transfer data, etc. Communications between the controller 108 and components of the cooling assembly 82 may be via a hardwire connection or via a wireless connection. A person of skill in the art will recognize that portions of the controller 108 may assume various forms (e.g., digital signal processor, analog device, etc.) capable of performing the functions described herein.

The controller 108 may form or otherwise be part of an electronic engine controller (EEC) for the propulsion system 20 and its gas turbine engine 22 (see FIG. 1). The EEC may control operating parameters of the gas turbine engine 22 including, but not limited to, fuel flow, stator vane position (e.g., variable compressor inlet guide vane (IGV) position), compressor air bleed valve position, propulsor 38 rotation speed, blade pitch, and/or torque, etc. so as to control an engine power and/or thrust of propulsion system 20. In some embodiments, the EEC may be part of a full authority digital engine control (FADEC) system for the propulsion system 20.

The sensors 110 include a coolant temperature sensor 110A and/or a fuel temperature sensor 110B. The coolant temperature sensor 110A of FIG. 3 is disposed downstream of the outlet 96 (e.g., between the outlet 96 and the coolant source 92) to measure a temperature of coolant (e.g., oil) flowing to the coolant source 92. Of course, the coolant temperature sensor 110A may alternatively be located upstream of the inlet 94, at (e.g., on, adjacent, or proximate) the heat exchanger 84, at (e.g., on, adjacent, or proximate) the coolant source 92, or another suitable location to measure a temperature of the coolant. The fuel temperature sensor 110B is disposed in the fuel tank 91, for example, at (e.g., on, adjacent, or proximate) the heat exchanger 84, to measure a temperature of the fuel within the fuel tank 91.

The bypass regulator 90 is disposed in fluid communication with the coolant source 92 and the inlet 94. For example, the bypass regulator 90 of FIG. 3 is disposed downstream of the pump 86 and upstream of the inlet 94. The bypass regulator 90 is further connected in fluid communication with a bypass conduit 116. The bypass regulator 90 is selectively configurable to direct some or all of the coolant pumped from the pump 86 through the bypass conduit 116 downstream of the outlet 96, thereby bypassing the heat exchanger 84. The bypass regulator 90 may be configured, for example, as a solenoid valve or other remotely operated valve. The bypass regulator 90 may alternatively be configured as or otherwise include a mechanical thermostat (a bimetallic or expanding wax pellet thermostat). The present disclosure, however, is not limited to any particular configuration of the bypass regulator 90. The bypass regulator 90 may be positionable in a closed position, an open position, or a plurality of intermediate positions between the closed position and the open position. In the closed position of the bypass valve 90, all or substantially all of the coolant from the pump 86 may be directed through the heat exchanger 84. In the open position or an intermediate position of the bypass regulator 90, all or a portion of the coolant from the pump 86 may be directed through the bypass conduit 116 bypassing the heat exchanger 84.

In some embodiments, the controller 108 may control a position of the bypass regulator 90 based on a measured temperature of the coolant from the coolant temperature sensor 110A. The memory 114 may include instructions which, when executed by the processor 112, cause the controller 108 and/or its processor 112 to control a position of the bypass regulator 90 using the measured temperature of the coolant. The controller 108 may identify a high-temperature coolant condition of the coolant where the measured coolant temperature is greater than or equal to a high-temperature threshold value. In response to identification of the high-temperature coolant condition, the controller 108 may control the bypass regulator 90 to fully or partially close to direct a greater amount of the coolant through the heat exchanger 84. Similarly, the controller 108 may identify a low-temperature coolant condition of the coolant where the measured coolant temperature is less than or equal to a low-temperature threshold value. In response to identification of the low-temperature coolant condition, the controller 108 may control the bypass regulator 90 to fully or partially open to direct a greater amount of coolant through the bypass conduit 116, thereby bypassing the heat exchanger 84. Routine experimentation and/or analysis may be performed by one of ordinary skill in the art to select a high-temperature threshold value and/or a low-temperature threshold value suitable for the particular coolant system (e.g., the coolant source 92), in accordance with and as informed by one or more aspects of the present disclosure.

In some embodiments, the controller 108 may control a position of the bypass regulator 90 based on a measured temperature of fuel (e.g., in the fuel tank 91) from the fuel temperature sensor 110B. The memory 114 may include instructions which, when executed by the processor 112, cause the controller 108 and/or its processor 112 to control a position of the bypass regulator 90 using the measured temperature of the fuel. The controller 108 may identify a high-temperature fuel condition of the fuel where the measured fuel temperature is greater than or equal to a high-temperature threshold value. In response to identification of the high-temperature fuel condition, the controller 108 may control the bypass regulator 90 to fully or partially open to direct a greater amount of coolant through the bypass conduit 116, thereby bypassing the heat exchanger 84 and transferring less heat energy to the fuel. Similarly, the controller 108 may identify a low-temperature fuel condition of the fuel where the measured fuel temperature is less than or equal to a low-temperature threshold value. In response to identification of the low-temperature fuel condition, the controller 108 may control the bypass regulator 90 to fully or partially close to direct a greater amount of the coolant through the heat exchanger 84. Routine experimentation and/or analysis may be performed by one of ordinary skill in the art to select a high-temperature threshold value and/or a low-temperature threshold value suitable for the particular fuel system (e.g., the fuel system 40; see FIG. 1), in accordance with and as informed by one or more aspects of the present disclosure.

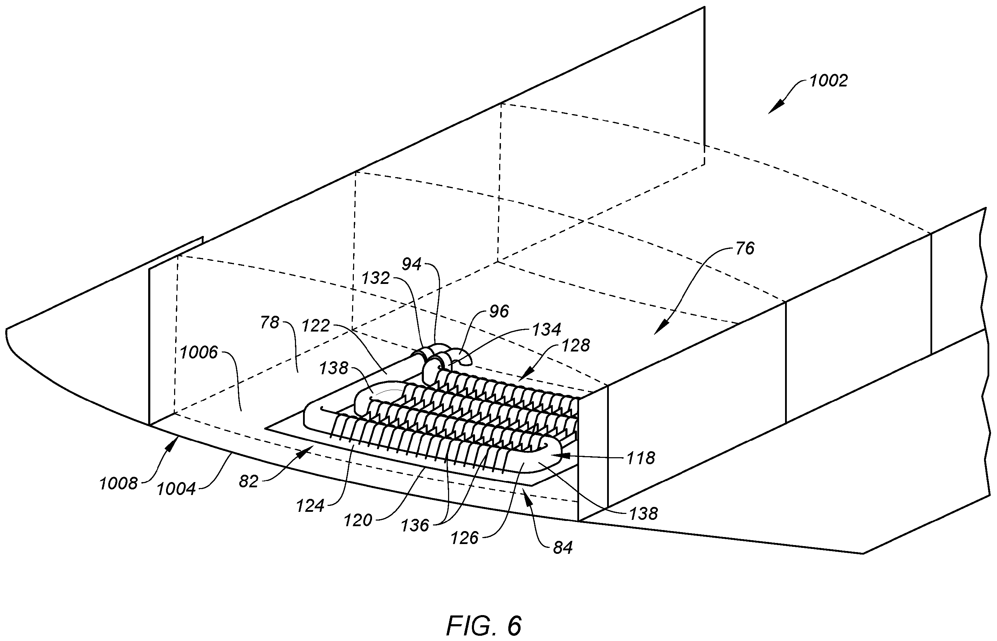

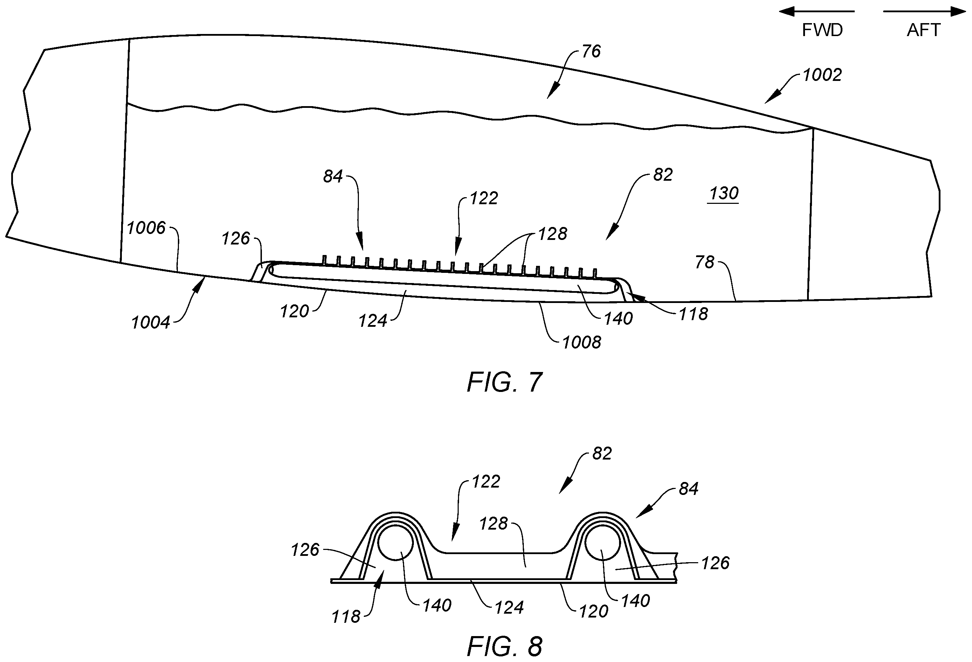

FIGS. 6-8 illustrate the heat exchanger 84 in greater detail. FIG. 6 illustrates a perspective view of the heat exchanger 84 disposed within the fuel tank 91. FIG. 7 illustrates a cutaway, side view of the heat exchanger 84 disposed within the fuel tank 91. FIG. 8 illustrates another cutaway, side view of a portion of the heat exchanger 84.

The heat exchanger 84 of FIGS. 6-8 is configured as a surface heat exchanger (e.g., a liquid-liquid surface heat exchanger and/or a liquid-air surface heat exchanger). The heat exchanger 84 includes a heat exchanger body 118. The heat exchanger body 118 extends between and to inner side 120 (e.g., a bottom side relative to a nominal gravitational orientation) of the heat exchanger body 118 and an outer side 122 (e.g., a top side relative to a nominal gravitational orientation) of the heat exchanger body 118. The heat exchanger body 118 includes a base body portion 124 and a conduit body portion 126. The heat exchanger body 118 may additionally include a plurality of heat transfer fins 128.

The heat exchanger body 118 of FIGS. 6-8 is disposed at (e.g., on, adjacent, or proximate) the bottom side 78 of the fuel tank 76 (see also FIG. 1) such that the heat exchanger body 118 may typically be immersed within fuel 130 during operation of the propulsion system 20 (see FIG. 1). The base body portion 124 is configured as a plate extending along and forming the inner side 120. The base body portion 124 (e.g., the inner side 120) may be mounted to or otherwise disposed at (e.g., on, adjacent, or proximate) the lower skin 1004 (e.g., the interior skin side 1006). Alternatively, the base body portion 124 may form a portion of the lower skin 1004 and the exterior skin side 1008. The conduit body portion 126 is disposed on the base body portion 124. The conduit body portion 126 extends between and to an inlet end 132 of the conduit body portion 126 and an outlet end 134 of the conduit body portion 126. The conduit body portion 126 may include a plurality of lengths 136 and turns 138 along the conduit body portion 126 from the inlet end 132 to the outlet end 134. The conduit body portion 126 forms an internal coolant passage 140. The coolant passage 140 extends through the conduit body portion 126 from the inlet 94 at (e.g., on, adjacent, or proximate) the inlet end 132 to the outlet 96 at (e.g., on, adjacent, or proximate) the outlet end 134. The heat exchanger body 118 may additionally include the heat transfer fins 128 along the outer side 122 to facilitate improved heat transfer between the coolant and the fuel 130. For example, each of the heat transfer fins 128 may be disposed on the base body portion 124 and the conduit body portion 126 along the outer side 122. As shown in FIG. 7, the heat transfer fins 128 may extend parallel or substantially parallel to one another.

In operation of the cooling assembly 82, the coolant (e.g., oil) from the coolant source 92 is directed through the heat exchanger 84 (e.g., the coolant passage 140). Heat energy from the coolant is transferred to the fuel 130 within the fuel tank 76 as well as to ambient air flowing along the lower skin 1004 (e.g., the exterior skin side 1008).

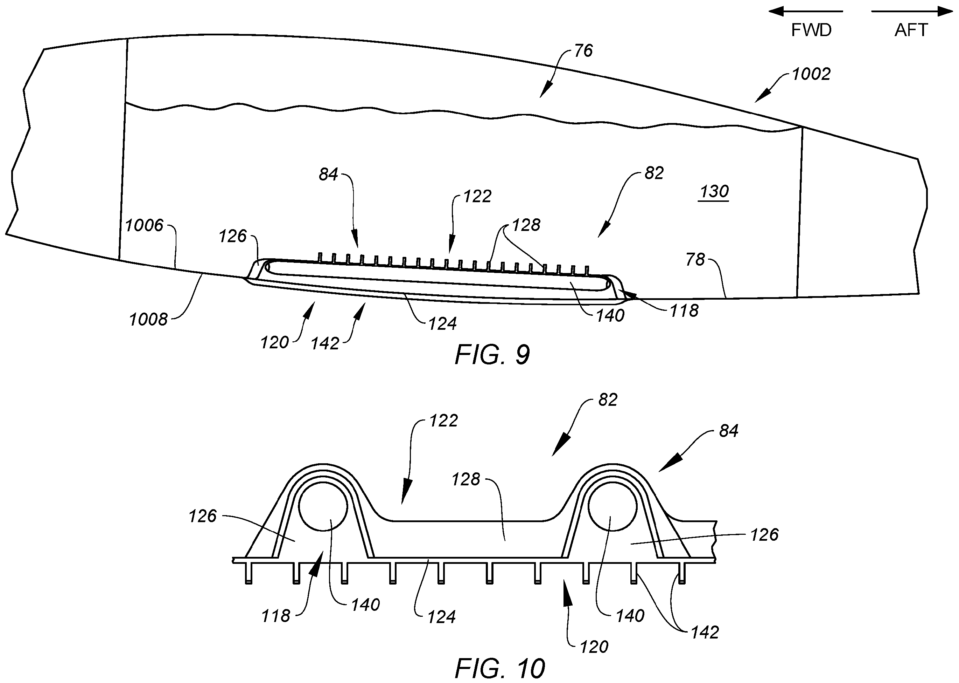

Referring to FIGS. 9 and 10, in some embodiments, the heat exchanger body 118 may additionally include a second plurality of heat transfer fins 142. The heat transfer fins 142 are disposed along the inner side 120 and exterior to the wing 1002 (e.g., the lower skin 1004) to facilitate improved heat transfer between the coolant and the ambient air flowing along the lower skin 1004 (e.g., the exterior skin side 1008). Each of the heat transfer fins 142 may extend parallel or substantially parallel to one another. Each of the heat transfer fins 142 may in a forward to aft direction along the exterior skin side 1008, for example, parallel to or substantially parallel to a general direction of ambient air flow along the exterior skin side 1008 during flight.

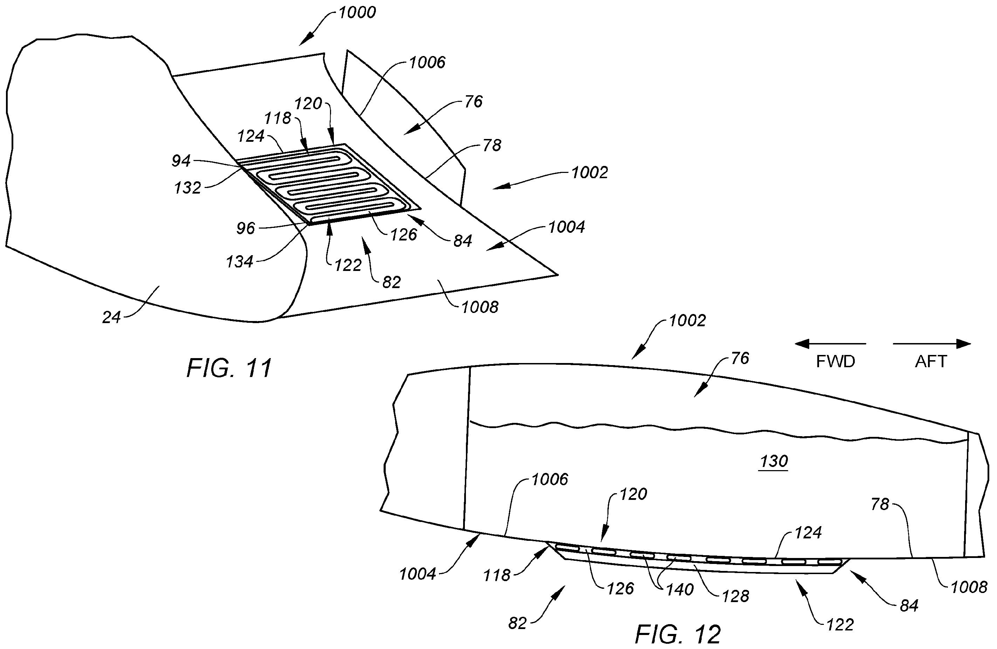

Referring to FIGS. 11 and 12, in some embodiments, the heat exchanger body 118 may be disposed on an exterior of the wing 1002 coincident with the fuel tank 76. For example, the base body portion 124 (e.g., the inner side 120) may be mounted to or otherwise disposed at (e.g., on, adjacent, or proximate) the exterior skin side 1008 for a portion of the lower skin 1004 forming the fuel tank 76. The heat exchanger 84 embodiment of FIGS. 11 and 12 may facilitate greater heat transfer from the coolant to the ambient air flow along the wing 1002 and less heat transfer to the fuel 130, for example, compared to the heat exchanger 84 embodiments of FIGS. 6-10.

While the principles of the disclosure have been described above in connection with specific apparatuses and methods, it is to be clearly understood that this description is made only by way of example and not as limitation on the scope of the disclosure. Specific details are given in the above description to provide a thorough understanding of the embodiments. However, it is understood that the embodiments may be practiced without these specific details.

It is noted that the embodiments may be described as a process which is depicted as a flowchart, a flow diagram, a block diagram, etc. Although any one of these structures may describe the operations as a sequential process, many of the operations can be performed in parallel or concurrently. In addition, the order of the operations may be rearranged. A process may correspond to a method, a function, a procedure, a subroutine, a subprogram, etc.

The singular forms "a," "an," and "the" refer to one or more than one, unless the context clearly dictates otherwise. For example, the term "comprising a specimen" includes single or plural specimens and is considered equivalent to the phrase "comprising at least one specimen." The term "or" refers to a single element of stated alternative elements or a combination of two or more elements unless the context clearly indicates otherwise. As used herein, "comprises" means "includes." Thus, "comprising A or B," means "including A or B, or A and B," without excluding additional elements.

It is noted that various connections are set forth between elements in the present description and drawings (the contents of which are included in this disclosure by way of reference). It is noted that these connections are general and, unless specified otherwise, may be direct or indirect and that this specification is not intended to be limiting in this respect. Any reference to attached, fixed, connected, or the like may include permanent, removable, temporary, partial, full and/or any other possible attachment option.

The terms "substantially," "about," "approximately," and other similar terms of approximation used throughout this patent application are intended to encompass variations or ranges that are reasonable and customary in the relevant field. These terms should be construed as allowing for variations that do not alter the basic essence or functionality of the invention. Such variations may include, but are not limited to, variations due to manufacturing tolerances, materials used, or inherent characteristics of the elements described in the claims, and should be understood as falling within the scope of the claims unless explicitly stated otherwise.

No element, component, or method step in the present disclosure is intended to be dedicated to the public regardless of whether the element, component, or method step is explicitly recited in the claims. As used herein, the terms "comprise", "comprising", or any other variation thereof, are intended to cover a non-exclusive inclusion, such that a process, method, article, or apparatus that comprises a list of elements does not include only those elements but may include other elements not expressly listed or inherent to such process, method, article, or apparatus.

While various inventive aspects, concepts and features of the disclosures may be described and illustrated herein as embodied in combination in the exemplary embodiments, these various aspects, concepts, and features may be used in many alternative embodiments, either individually or in various combinations and sub-combinations thereof. Unless expressly excluded herein all such combinations and sub-combinations are intended to be within the scope of the present application. Still further, while various alternative embodiments as to the various aspects, concepts, and features of the disclosures--such as alternative materials, structures, configurations, methods, devices, and components, and so on--may be described herein, such descriptions are not intended to be a complete or exhaustive list of available alternative embodiments, whether presently known or later developed. Those skilled in the art may readily adopt one or more of the inventive aspects, concepts, or features into additional embodiments and uses within the scope of the present application even if such embodiments are not expressly disclosed herein. For example, in the exemplary embodiments described above within the Detailed Description portion of the present specification, elements may be described as individual units and shown as independent of one another to facilitate the description. In alternative embodiments, such elements may be configured as combined elements.

## Claims

1. An assembly for an aircraft propulsion system (20), the assembly comprising:
an engine (22) including a coolant system (92; 98);
an aircraft aerostructure (1002) forming a fuel tank (76; 91) for the engine (22), the aircraft aerostructure (1002) including an aerostructure skin (1004) including an interior skin side (1006) and an exterior skin side (1008), the interior skin side (1006) forming a bottom side (78) of the fuel tank (76; 91), the exterior skin side (1008) forming an aerodynamic surface of the aircraft aerostructure (1002); and
a heat exchanger (84) disposed at the aerostructure skin (1004), the heat exchanger (84) including a heat exchanger body (118) forming a coolant passage (140), the coolant passage (140) extending through the heat exchanger body (118) between and to an inlet (94) and an outlet (96), and the inlet (94) and the outlet (96) are connected in fluid communication with the coolant system (92; 98).

2. The assembly of claim 1, wherein the heat exchanger body (118) is disposed within the fuel tank (76; 91).

3. The assembly of claim 2, wherein the heat exchanger body (118) is disposed at the bottom side (78) of the fuel tank (76; 91).

4. The assembly of claim 1, wherein the heat exchanger (84) is disposed outside the fuel tank (76; 91) at the exterior skin side (1008).

5. The assembly of claim 4, wherein the heat exchanger (84) is disposed at the exterior skin side (1008) on a portion of the aerostructure skin (1004) forming the fuel tank (76; 91).

6. The assembly of any preceding claim, wherein the heat exchanger body (118) includes a first plurality of heat transfer fins (128) disposed within the fuel tank (76; 91).

7. The assembly of claim 6, wherein the heat exchanger body (118) includes a second plurality of heat transfer fins (142) disposed outside of the fuel tank (76; 91) at the exterior skin side (1008).

8. The assembly of any preceding claim, wherein the engine (22) includes a rotational assembly (44, 46, 48) and at least one bearing assembly (70) rotationally supporting the rotational assembly (44, 46, 48), and the coolant system (92; 98) is an engine oil system (98) connected in fluid communication with the at least one bearing assembly (70).

9. The assembly of claim 8, further comprising a bypass regulator (90) connected in fluid communication with the engine oil system (98) and the inlet (94) upstream of the inlet (94), wherein the bypass regulator (90) is selectively positionable in at least an open position or a closed position to control a coolant flow through a bypass conduit (116) to bypass the heat exchanger (84) and direct the coolant flow to the engine oil system (98).

10. The assembly of claim 9, further comprising a controller assembly (88) including a coolant temperature sensor (110A) and a controller (108), the coolant temperature sensor (110A) is configured to measure a coolant temperature of coolant for the engine oil system (98), the controller including a processor (112) and a non-transitory memory (114) storing instructions which, when executed by the processor (112), cause the processor (112) to:
control a position of the bypass regulator (90) using the coolant temperature.

11. The assembly of claim 9 or 10, further comprising a/the controller assembly (88) including a fuel temperature sensor (110B) and a/the controller (108), the fuel temperature sensor (110B) is disposed within the fuel tank (91), the fuel temperature sensor (110B) is configured to measure a fuel temperature of fuel within the fuel tank (91), the controller (108) including a processor (112) and a non-transitory memory (114) storing instructions which, when executed by the processor (112), cause the processor (112) to:
control a position of the bypass regulator (90) using the fuel temperature.

12. The assembly of claim 11, wherein controlling the position of the bypass regulator (90) using the fuel temperature includes:
identifying a presence or an absence of a high-temperature fuel condition by comparing the fuel temperature to a high-temperature threshold value; and
closing the bypass regulator (90) in response to identifying the presence of the high-temperature fuel condition.

13. The assembly of any preceding claim, wherein the aircraft aerostructure (1002) is an aircraft wing (1002).
